# EUROPEAN PATENT SPECIFICATION

(11) **EP 1 074 778 B1**
(45) Date of publication and mention of the grant of the patent: **07.06.2006**
(21) Application number: 99119347.5
(22) Date of filing: 28.09.1999
(51) Int. Cl.: F16L 21/04, F16L 21/08

(54) **Tube joint**
Rohrverbindung
Raccord de tuyau

(30) Priority: 03.08.1999 JP 21941099
(43) Date of publication of application: 07.02.2001
(73) Proprietor: Waterworks Technology Development Organization Co., Ltd., Osaka 530-0001 (JP)
(72) Inventor: Sato, Taichi, Kyoto 617-0812 (JP); Shirakawa, Koichi, Kobe-shi Hyogo-ken 651-1514 (JP); Sakai, Kosuke, Kobe-shi Hyogo-ken 651-1514 (JP)
(74) Representative: Sajda, Wolf E.

(56) References cited:
- EP-A- 0 899 495
- FR-A- 2 694 063
- US-A- 5 297 826
- US-A- 5 803 513

## Description

### 1. FIELD OF THE INVENTION

The present invention relates to a metal or resin tube joint adapted for use with water pipes and the like. In particular the invention relates to a tube joint according to the preamble of claim 1. Such a tube joint is known from US-A-5 297 826.

### 2. DESCRIPTION OF THE RELATED ART

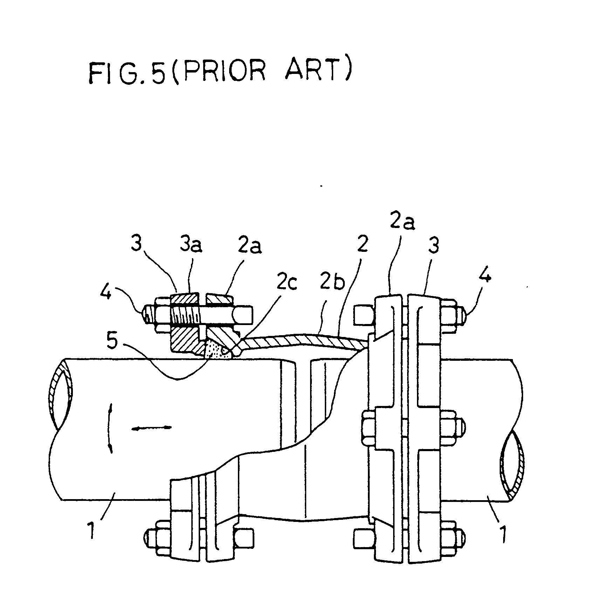

FIG. 5 shows one example of a tube joint for jointing ends of axially opposed metal or resin tubes 1 such that extending and contracting functions and a flexible function are provided. The tube joint includes a joint body 2 and a pair of push rings 3, and they are fastened by fastening means 4 which are T-shaped bolts and nuts. The joint body 2 includes opposed flange-like projections 2a and a cylindrical barrel portion 2b which is integrally formed such as to swell between the projections 2a.

Each of the projections 2a is provided at its inner periphery with a receiving port 2c whose diameter becomes wider toward its end. The push ring 3 also includes a projection 3a, and the joint body 2 is located at the outer periphery between the joint tubes 1 while leaving a circumferential gap. The push rings 3 are disposed at the opposite ends of the joint body 2, and the ends are fastened by the fastening means 4.

During installation, using the fastening means 4, a rubber packing 5 set between the joint body 2 and each of the push rings 3 is pushed by the surfaces of the push rings 3 and engages with the receiving port 2c having a wedge shape at the joint body 2; also, it comes in contact with the outer peripheral surface of the joint tube 1 under pressure. In such a manner, watertightness is established so that liquid flowing through the joint tubes 1 should not leak outside.

As also shown in FIG. 5, the conventional tube joint has such a structure that, if the fastening means 4 are tightened, the rubber packing 5 can freely be secured. Therefore, even if a tolerance tightening torque is indicated, the fastening state varies depending upon the tightening operation carried out by the operators, and the torque cannot reliably be controlled.

The cross section of the rubber packing 5 (JIS K6353; A type) shown in FIG. 5 is tapered, and any portions thereof are relatively hard and homogeneous having the same resilience. Therefore, a strong pressing force cannot be obtained, and the sealing ability is not sufficient. Also, as a rubber packing, which can be used in the tube joint shown in FIG. 5, there exists one having a soft portion (e.g. JIS K6353; K type), but the volume of the rubber packing 5 occupied by the soft portion is smaller than that occupied by the hard portion, and there is still a demand for a more reliable tube joint having improved resiliently deforming and sealing abilities.
US 5,297,836 and US 6,371,530 are each directed toward a tube joint for fastening two pieces of tubing. Each contains two rings designed to be squeezed together, and in doing so to compress pieces such as a packing ring, and a spacer. Compression of such apparatus features, creates a simple and yet watertight seal. No discussion, however, is presented of a spacer comprising an axial flange, which can readily be deformed during the fastening of the joint, so as to provide a even axial compression within the joint.

### SUMMARY OF THE INVENTION

The present invention has been accomplished to overcome the above-described conventional problems, and it is the first object of the invention to provide a tube joint in which the operation can easily be controlled by always obtaining a constant tightening force irrespective of the magnitude of the fastening force, and in which the sealing ability is always reliably obtained in a constant manner. It is another object of the present invention to provide a tube joint in which the sealing ability is stronger than that of prior art constructions so that a constant sealing ability can reliably be obtained which is greater than that in conventional devices.

The invention is solved in an advantageous and satisfying manner by the tube joint according to the present invention as set forth in the claims. Further developments of the tube joint according to the invention are specified in the subclaims.

For this purpose, a tube joint according to the present invention comprises the following components: a pushing ring provided at its outer periphery with a projection and adapted to be fitted to the outer periphery of one end of a joint tube; a tube or a joint body provided at its side opposite to the pushing ring, with a projection opposite to the projection of the pushing ring, wherein the tube or the joint body has a receiving portion which is widening toward the pushing ring and wherein the tube or the joint body is adapted to be fitted to the outer periphery of the joint tube with a peripheral gap left therebetween; a fastening device capable of moving the pushing ring in the axial direction of the tube or the joint body; a packing provided between the inner side and the outer side of the tube or the joint body and the joint tube and fitted through the receiving portion by its own resilient deformation by operation of the fastening device; a spacer provided and adapted to be inserted between the pushing ring and the tube or the joint body to limit the distance between the pushing ring and the tube or the joint body to a constant value.

According to the invention, the spacer is adapted to be removably coupled with the packing and has a flange projecting outward beyond the receiving portion of the tube or the joint body. Furthermore, this flange is bent and deformed along the receiving portion when being pushed to push the spacer in the receiving portion by fastening operating of said fastening device, thereby bringing the pushing ring and the tube or the joint body into abutment against each other.

Advantageous further developments of the tube joint according to the invention are specified in the subclaims.

Further features and advantages of the invention will be explained below in connection with preferred embodiments of the invention and with reference to the accompanying drawings.

### BRIEF DESCRIPTION OF THE DRAWINGS

- FIG. 1 is a: half sectional view showing a tube joint useful for understanding the invention;
- FIG. 2: is an enlarged sectional view showing the structure according to FIG. 1 immediately before tightening;
- FIG. 3: is a half sectional view showing a spacer of the present invention;
- FIG. 4a: to FIG. 4c show partial sectional views for explaining the operation of the spacer shown in FIG. 3; and
- FIG. 5: is a partially cut-away front view showing the structure of a conventional tube joint.

### DETAILED DESCRIPTION OF THE PREFERRED EMBODIMENTS

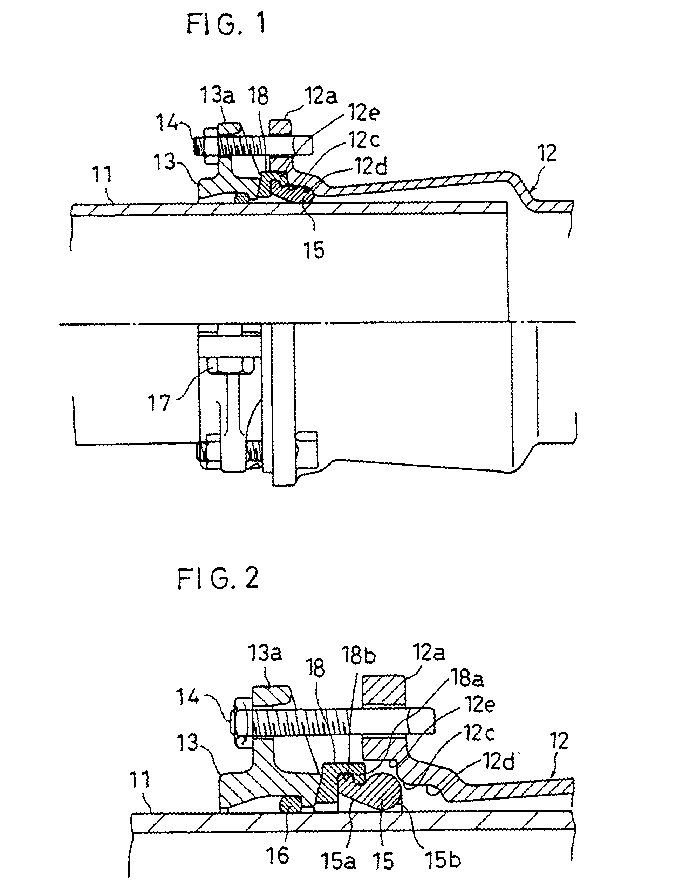

FIG. 1 and FIG. 2 show a tube joint, useful for understanding the invention, but not in accordance with the patent claims, wherein FIG. 1 is a half sectional view in a jointed state, and FIG. 2 is an enlarged sectional view showing the structure immediately before fastening.

The tube joint of FIGS. 1 and 2 is for the purpose of jointing a metal or resin joint tube 11 and a tube 12, but may also joint a pair of joint tubes 11. With respect to the joint tube 11, the tube 12 is extended rightward in FIG. 1, and its left end is formed slightly thicker such that a peripheral gap is left in the joint tube 12, wherein a flange-like projection 12a is integrally formed on the left end of the tube 12 in FIGs. I and 2.

A plurality of insertion holes, e.g. four bolt insertion holes, are formed in the projection 12a in the peripheral direction. The projection 12a is formed at its base with a receiving portion 12c which is widening toward an opposite push ring 13.

A pressing portion 12d which comprises a cylindrical surface parallel to the joint tube 11 is continuously formed on the receiving portion 12c at its constricting side. The widening side of the receiving portion 12c is stepwise widening, and this portion forms a receiving hole 12e.

At the side of the pushing ring 13, a coming-out preventing ring 16 is provided at the inner periphery thereof and inserted into a radial recess of the pushing ring 13. Also, the pushing ring 13 is formed at its outer periphery with a radial projection 13a in such a manner that the projection 13a and the projection 12a are opposed to each other in the axial direction as shown in FIG. 1 and in FIG. 2

As shown in FIG. 1, the pushing ring 13 is separated at one location, so that the pushing ring 13 can be fastened by a fixing tool 17. The projection 13a is provided with a series of bolt insertion holes corresponding to the bolt insertion holes of the projection 12a. A fastening device 14 comprising a T-shaped bolt and a nut can be inserted through a corresponding pair of bolt insertion holes and fastened by tightending the nut. Corresponding fastening devices 14 are provided in circumferential direction around the periphery of the tube.

A spacer ring 18 and a rubber packing 15 are combined and interposed between the tube 12 and the pushing ring 13. The spacer ring 18 is made of metal or resin, and the spacer ring 18 has an inner diameter greater than the outer diameter of the joint tube 11 and is provided with a substantially L-shaped cross section.

The spacer ring 18 is formed at its tip end at the side of the tube 12 with an engaging lip 18a projecting inwardly in a radial direction, and is formed at its inner periphery with a groove 18b. The rubber packing 15 is made of styrene-butadiene rubber (SBR) or the like.

As shown in FIG. 1 and FIG. 2, the rubber packing 15 is integrally formed and provided with a base 15a having a convex portion fitting into the groove 18b and with a concave portion which is continuous with the convex portion and adapted to receive the engaging lip 18a, and with a round tip end 15b.

As shown in FIG. 2, the rubber packing 15 has an inner diameter slightly greater than the outer diameter of the joint tube 11 so that the rubber packing 15 can easily be fitted over the joint tube 11.

In particularly, in this rubber packing 15, the base 15a is a hard portion or heel portion, and the tip end 15b is a soft portion or valve portion. Contrary to conventional prior-art structures, the soft portion has a greater volume than that of the hard portion so that a strong self-sealing ability can be exhibited. That is, if a water pressure is applied to this portion, a strong sealing ability proportional to the magnitude of the water pressure can be achieved.

The pushing ring 13 and the spacer ring 18 with the rubber packing 15 are set around the joint tube 11 in this order, and then the end of the tube 12 is put on the outer periphery of the joint tube 11. Then, the fastening devices 14 are inserted through the corresponding pairs of bolt insertion holes to establish the state shown in FIG. 2 of the drawings.

From this state, if the fastening devices 14 are tightened, the pushing ring 13 pushes the spacer ring 18 toward the tube 12 and also pushes the rubber packing 15 in this direction, wherein the rubber packing 15 is resiliently deformed during the tightening operation. When the tightening operation proceeds, a portion of the tip end 15a of the rubber packing 15 slides through the receiving portion 12c into the pressing portion 12d and is tightly pressed between the tube 12 and the tube 11. Also, a remaining portion of the tip end 15a is fitted in the receiving portion 12c. The final status is shown in FIG. 1 of the drawings.

If the fastening devices 14 are further tightened, the tip end of the spacer ring 18 in axial direction is abutting against a wall surface in the receiving hole 12e. In this state, even if an attempt is made to further tighten the fastening device 14 with a greater torque, the pushing ring 13 cannot be moved further in a axial direction; hence, the resilient deformation of the rubber packing 15 is completely stopped, and the tightening operation of the fastening device 14 is stopped naturally. At this stage, the tip end of the spacer ring 18 and the opposite, radially extending wall surface in the receiving hole 12e abut against each other at their surfaces; therefore, the tightening operation of the fastening device 14 can reliably be stopped.

With such a structure, it is always possible to provide the packing 15 with a constant fastening force irrespective of the magnitude of the externally applied fastening or tightening force of the fastening device 14. Even though the packing is usually prone to be unstable with its resilient deformation, it is now possible with the embodiment according to the invention to always fasten the packing 15 with a reliable and reproducible resilient deformation; hence, the operation is facilitated, and the control of the operation is easy.

Furthermore, the packing 15 can be fastened to its utmost, and it is always possible to obtain a constant sealing ability in a reliable manner. According to the present invention, the sealing ability is stronger than that of prior-art devices, and the constant greater sealing ability can be reliably obtained.

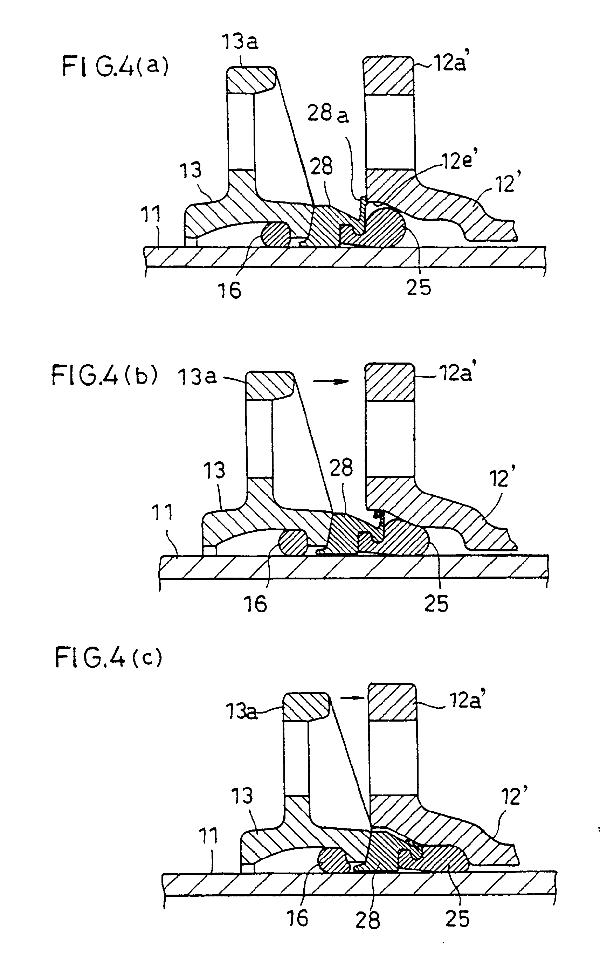

In the description above, the spacer ring 18 can abut against the wall of the tube 12 at their surfaces by pushing the pushing ring 13 in the axial direction of the tube 12. The current invention presents the structure as shown in FIG. 4a to FIG. 4c, a resin spacer ring 28, which can be fitted to a packing 25, may be inserted between the pushing ring 13 and a tube 12'; the spacer ring 28 may deform and abut against the pushing ring 13 and the tube 12' by the tightening function exerted by a fastening device (not shown) of the type as shown in FIG. 1.

With such a structure, it is also possible to always provide the packing 25 with a constant tightening or fastening force irrespective of the magnitude of the externally applied tightening force of the fastening device. Even if a packing is prone to be unstable with its resilient deformation in general, it is possible with the structure according to the invention to always fasten the packing 25 in a reliable manner with a constant resilient deformation, wherein the operation is facilitated, and the control of the operation is easy.

Furthermore, the packing 25 may be fastened to the utmost, and it is nevertheless possible to always obtain the desired constant sealing ability in a reliable manner. The sealing ability is stronger than that of the conventional prior-art devices so that a constant greater sealing ability can be reliably obtained. A receiving portion of the tube 12' has a longer inclined portion as compared with that of the receiving portion 12c shown in FIG. 1, so that the spacer ring 28 can be inserted easily as will be explained below.

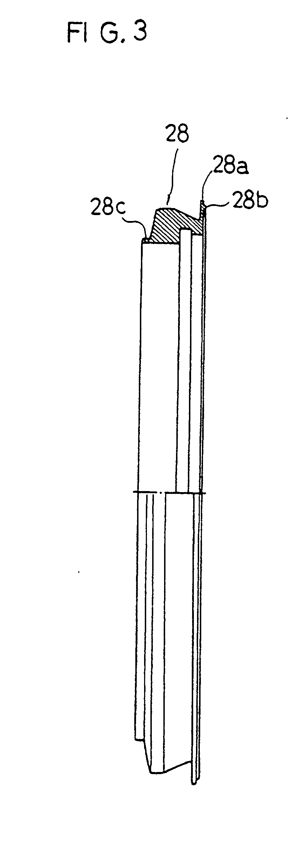

Unlike the spacer 18 shown in FIG. 1, the spacer ring 28 as shown in FIG. 3 is provided with a flange 28a opposite to the tube 12', and at the side thereof opposite to the pushing ring 13, a fin 28c is formed, which fin 28c is opposite to the pushing ring 13 for facilitating the alignment of the pushing ring 13.

Furthermore, a projection 28b capable of engaging a flange-like projection 12a' of the tube 12' is formed on the flange 28a, as shown in FIG. 3 of the drawings. Hence, when the projection 13a is moving in the axial direction towards the projection 12a', the spacer ring 28 comes to abut against the tube 12', and an inner corner of the flange-like projection 12a' of the tube 12', which forms an entrance of a receiving hole 12e', the flange 28a and the projection 28b of the spacer ring 28 abut against each other at their surfaces, and the spacer ring 28 can be aligned easily.

The final stage can be inferred from FIG. 4c of the drawings where an inclined outer periphery of the spacer ring 28 is located opposite to a corresponding inclined inner wall of the tube 12' so that these surfaces are matching.

If the tube joint is formed as described above, considerable advantages are achieved. Namely, when it is transported from the factory to the working site, factory-adjusted positions of the pushing ring and the packing should not be deviated, and a troublesome operation, where the joint is again disassembled at the working site for inspection and where the joint is again assembled, is not necessary at all, which is very convenient.

On the contrary, in the case of a conventional tube joint, when it is transported from the factory to the working site in a state where the pushing ring is directed downward, the pushing ring is moved in a direction biasing the packing in some cases.

In such a case of a conventional device, the diameter of the packing can be reduced by the influence of the tapered receiving portion, and there was a possibility that the packing cannot be fitted to the joint tube properly, and therefore it was necessary to again disassemble the tube joint for inspection at the working site and to assemble it again. However, with the present invention such an operation is unnecessary.

The packing 25 according to the invention includes a base comprising the hard portion and a tip end comprising the soft portion similar to the situation shown in FIG. 1, but the soft portion has an outer diameter greater than the packing 15 so that a greater self-sealing ability can be exhibited.

In other words, in the case of the packing 15 shown in FIG. 1, the diameters of the base and the tip end are almost the same, but in the case of the packing 25 shown in FIGs. 4a to 4c, the outer diameter of the tip end is greater than that of the base, and with this design, a greater self-sealing ability can be exhibited. The base and the tip end of the packing 25 may be made of the same material.

Similar to the spacer ring 18, a groove which is similar to the groove 18b of the spacer ring 18 shown in FIG. 1 is formed in the inner periphery of the spacer ring 28 so that the base of the packing 25 having a convex portion is fitting into the groove.

Next, the operation of the spacer ring 28 will be explained in more detail with reference to FIG. 4a to FIG. 4c. FIG. 4a shows a state where the pushing ring 13 and the spacer ring 28 with the rubber packing 25 are set around the joint tube 11 in this order, and the end of the tube 12' is put on the outer periphery of the joint tube 11. This state is changed to a state shown in FIG. 4b by tightening the fastening device which is not shown.

In this manner, the flange 28a of the spacer ring 28 is bent and deformed. When further deformed, as shown in FIG. 4c, the packing 25 is pushed further in the axial direction toward the pressing portion, and the tip end of the pushing ring 13 abuts against the inner corner of the flange-like projection 12a' so as to prevent any further advance.

(b) As a spacer for limiting the distance between the pushing ring 13 and the tube 12, 12' or the joint body to a constant value, any member will be sufficient if it includes a ring which is integrally formed and projected toward the push ring 13 or the tube 12, 12' and abuts against the mating portion to limit the movement constantly.

(c) Although the base of the packing 25 comprises a hard portion and the tip end comprises a soft portion in the embodiment described above, the base and the tip end may also be made of the same material. With such a structure, there are merits that it is possible to omit the steps of providing both the soft portion and the hard portion and jointing both of the portions so that the producing cost can be reduced. Rather, in such a case the entire packing may be made of the same material as that of the hard heel portion or the soft valve portion, or they may be made of a material having intermediate characteristics between those of the heel portion and the valve portion having both of the functions.

## Claims

1. A tube joint, comprising:
- a pushing ring (13) provided at its outer periphery with a projection (13a) and adapted to be fitted to the outer periphery of one end of a joint tube (11);
- a tube or a joint body (12') provided at its side opposite to the pushing ring (13) with a projection (12a') opposite to the projection (13a) of the pushing ring (13), wherein the tube or the joint body (12') has a receiving portion (12c) which is widening toward the pushing ring (13) and wherein the tube or the joint body (12') is adapted to be fitted to the outer periphery of the joint tube (11) with a peripheral gap left therebetween; and
- a fastening device (14) capable of moving the pushing ring (13) in the axial direction of the tube or the joint body (12'), and
- a packing (25) provided between the inner side and the outer side of the tube or the joint body (12') and the joint tube (11) and fitted through the receiving portion by its own resilient deformation by operation of the fastening device;
- a spacer (28) provided and adapted to be inserted between the pushing ring (13) and the tube or the joint body (12') to limit the distance between the pushing ring (13) and the tube or the joint body (12') to a constant value;
**characterized in that**
the spacer (28) is adapted to be removably coupled with the packing (25) and has a flange (28a) projecting outward beyond the receiving portion of the tube or the joint body (12'),
and **in that** the flange (28a) is bent and deformed along the receiving portion when being pushed to push the spacer (28) in the receiving portion by fastening operating of said fastening device (14), thereby bringing the pushing ring (13) and the tube or the joint body (12') into abutment against each other.

2. The tube joint according to claim 1,
**characterized in that** the spacer (28) is an independent ring provided between the pushing ring (13) and the tube or the joint body (12').

3. The tube joint according to claim 1 or 2,
**characterized in that** the inner periphery of the packing (25), in its natural state, is greater in diameter than the outer periphery of the joint tube (11).

4. The tube joint according to claim 3,
**characterized in that** a deep portion of the receiving portion at its constricted side comprises a cylindrical surface parallel to the joint tube (11),
**in that** a soft portion of the packing (25) is greater in volume than a hard base of the packing (25),
and **in that** a tip end of the soft portion is rounded in cross-section so that the tip end is adapted to be resiliently deformed in the space surrounded by the parallel cylindrical surface of the receiving portion and fitted in under pressure.

5. The tube joint according to claim 3 or 4,
**characterized in that** the base of the packing (25) at the side of the pushing ring (13) and the tip end of the packing (25) at the side of the tube or the joint body (12') are made of the same material or of different materials, wherein, if the base and the tip end are made of different materials, the base is a hard portion and the tip end at the side of the tube or the joint body (12') is a soft portion.

## Patentansprüche

1. Rohrverbindung, die folgendes aufweist:
- einen Preßring (13), der an seinem Außenumfang mit einem Vorsprung (13a) versehen ist und dazu ausgebildet ist, auf den Außenumfang des einen Endes eines Verbindungsrohrs (11) gepaßt zu werden;
- einen Rohr- oder einen Verbindungskörper (12'), der an seiner dem Preßring (13) gegenüberliegenden Seite mit einem Vorsprung (12a') versehen ist, der dem Vorsprung (13a) des Preßrings (13) gegenüberliegt, wobei der Rohr- oder der Verbindungskörper (12') einen Aufnahmebereich (12c) aufweist, der in Richtung auf den Preßring (13) breiter wird, und wobei der Rohr- oder der Verbindungskörper (12') dazu ausgebildet ist, derart auf den Außenumfang des Verbindungsrohrs (11) gepaßt zu werden, daß dazwischen ein umfangsmäßiger Spalt verbleibt; und
- eine Befestigungseinrichtung (14), die in der Lage ist, den Preßring (13) in Axialrichtung des Rohr- oder des Verbindungskörpers (12') zu bewegen, und
- eine Dichtung (25), die zwischen der Innenseite und der Außenseite des Rohr- oder des Verbindungskörpers (12') und dem Verbindungsrohr (11) vorgesehen ist und aufgrund ihrer eigenen elastischen nachgiebigen Verformung durch Betätigung der Befestigungsvorrichtung durch den Aufnahmebereich gepaßt ist;
- ein Abstandselement (28), das dafür vorgesehen und ausgebildet ist, zwischen dem Preßring (13) und dem Rohr- oder dem Verbindungskörper (12') eingesetzt zu werden, um die Distanz zwischen dem Preßring (13) und dem Rohr- oder dem Verbindungskörper (12') auf einen konstanten Wert zu begrenzen,
**dadurch gekennzeichnet,**
**daß** das Abstandselement (28) dazu ausgebildet ist, mit der Dichtung (25) lösbar gekoppelt zu werden, und einen Flansch (28a) aufweist, der nach außen über den Aufnahmebereich des Rohr- oder des Verbindungskörpers (12') hinausragt,
und **daß** der Flansch (28a) gebogen und entlang des Aufnahmebereichs verformt wird, wenn er durch eine Befestigungsbetätigung der Befestigungseinrichtung (14) mit Druck beaufschlagt wird, um das Abstandselement (28) in den Aufnahmebereich zu drücken und **dadurch** den Preßring (13) und den Rohr- oder den Verbindungskörper (12') in Anlage aneinander zu bringen.

2. Rohrverbindung nach Anspruch 1,
**dadurch gekennzeichnet,**
**daß** das Abstandselement (28) ein unabhängiger Ring ist, der zwischen dem Preßring (13) und dem Rohr- oder dem Verbindungskörper (12') vorgesehen ist.

3. Rohrverbindung nach Anspruch 1 oder 2,
**dadurch gekennzeichnet,**
**daß** der Innenumfang der Dichtung (25) in ihrem Neutralzustand durchmessermäßig größer ist als der Außenumfang des Verbindungsrohrs (11).

4. Rohrverbindung nach Anspruch 3,
**dadurch gekennzeichnet,**
**daß** ein tiefer Bereich des Aufnahmebereichs an seiner verengten Seite eine zylindrische Oberfläche parallel zu dem Verbindungsrohr (11) aufweist,
**daß** ein weicher Bereich der Dichtung (25) volumenmäßig größer ist als eine harte Basis der Dichtung (25),
und **daß** ein äußeres Ende des weichen Bereichs im Querschnitt abgerundet ist, so daß das äußere Ende dazu ausgebildet ist, in dem von der parallelen zylindrischen Oberfläche des Aufnahmebereichs umgebenen Raum in elastisch nachgiebiger Weise verformt zu werden sowie unter Druck eingepaßt zu werden.

5. Rohrverbindung nach Anspruch 3 oder 4,
**dadurch gekennzeichnet,**
**daß** die Basis der Dichtung (25) auf der Seite des Preßrings (13) und das äußere Ende der Dichtung (25) auf der Seite des Rohr- oder des Verbindungskörpers (12') aus dem gleichen Material oder aus unterschiedlichen Materialien gebildet sind, wobei es sich bei Herstellung der Basis und des äußeren Endes aus unterschiedlichen Materialien bei der Basis um einen harten Bereich und bei dem äußeren Ende auf der Seite des Rohr- oder des Verbindungskörpers (12') um einen weichen Bereich handelt.

## Revendications

1. Raccord de tuyau, comprenant :
- un anneau de poussée (13) muni, au niveau de sa périphérie externe, d'une saillie (13a) et adapté pour être ajusté sur la périphérie externe d'une extrémité d'un tuyau de raccord (11) ;
- un tuyau ou un corps de raccord (12') muni, au niveau de son côté opposé à l'anneau de poussée (13), d'une saillie (12a') opposée à la saillie (13a) de l'anneau de poussée (13), le tuyau ou le corps de raccord (12') ayant une partie de réception (12c) qui s'élargit vers l'anneau de poussée (13), et le tuyau ou le corps de raccord (12') étant adapté pour être ajusté sur la périphérie externe du tuyau de raccord (11) avec un espace périphérique laissé entre eux ; et
- un dispositif d'attache (14) capable de déplacer l'anneau de poussée (13) dans la direction axiale du tuyau ou du corps de raccord (12'), et
- un joint (25) fourni entre le côté interne et le côté externe du tuyau ou du corps de raccord (12') et le tuyau de raccord (11), et ajusté à travers la partie de réception par sa propre déformation élastique sous l'action du dispositif d'attache ;
- une entretoise (28) fournie et adaptée pour être insérée entre l'anneau de poussée (13) et le tuyau ou le corps de raccord (12') pour limiter la distance entre l'anneau de poussée (13), et le tuyau ou le corps de raccord (12') à une valeur constante ;
**caractérisé en ce que**
l'entretoise (28) est adaptée pour être couplée de façon amovible au joint (25), et a un rebord (28a) faisant saillie vers l'extérieur au-delà de la partie de réception du tuyau ou du corps de raccord (12'),
et **en ce que** le rebord (28a) est plié et déformé le long de la partie de réception lorsqu'il est amené à pousser l'entretoise (28) dans la partie de réception lors d'une action d'attache dudit dispositif d'attache (14), ce qui amène l'anneau de poussée (13) et le tuyau ou le corps de raccord (12') à venir buter l'un contre l'autre.

2. Raccord de tuyau selon la revendication 1,
**caractérisé en ce que** l'entretoise (28) est un anneau indépendant fourni entre l'anneau de poussée (13) et le tuyau ou le corps de raccord (12').

3. Raccord de tuyau selon la revendication 1 ou 2,
**caractérisé en ce que** la périphérie interne du joint (25), dans son état naturel, a un diamètre supérieur à celui de la périphérie externe du tuyau de raccord (11).

4. Raccord de tuyau selon la revendication 3,
**caractérisé en ce qu'**une partie profonde de la partie de réception au niveau de son côté étranglé comprend une surface cylindrique parallèle au tuyau de raccord (11), **en ce qu'**une partie souple du joint (25) est supérieure en volume à la base dure du joint (25),
et **en ce qu**'une extrémité d'embout de la partie souple est arrondie en section transversale, de telle sorte que l'extrémité d'embout est adaptée pour être déformée de façon élastique dans l'espace entouré par la surface cylindrique parallèle de la partie de réception et ajustée sous pression.

5. Joint de raccord selon la revendication 3 ou 4,
**caractérisé en ce que** la base du joint (25) du côté de l'anneau de poussée (13) et l'extrémité d'embout du joint (25) du côté du tuyau ou du corps de raccord (12') sont composées du même matériau ou de matériaux différents, dans lequel, si la base et l'extrémité d'embout sont composées de matériaux différents, la base est une partie dure et l'extrémité d'embout du côté du tuyau ou du corps de raccord (12') est une partie souple.
